# EUROPEAN PATENT SPECIFICATION

(11) **EP 3 868 682 B1**
(45) Date of publication and mention of the grant of the patent: **16.11.2022**
(21) Application number: 21155619.6
(22) Date of filing: 05.02.2021
(51) Int. Cl.: B65D 43/02, A47G 19/26, B65D 83/00

(54) **CHEESE BOX**
KÄSEBOX
BOÎTE À FROMAGE

(30) Priority: 10.02.2020 NO 20200166
(43) Date of publication of application: 25.08.2021
(73) Proprietor: Dionysos AS, 6065 Ulsteinvik (NO)
(72) Inventor: Engeset, Haakon, 6065 Ulsteinvik (NO)
(74) Representative: Curo AS

(56) References cited:
- EP-A1- 1 493 364
- US-A1- 2012 074 174

## Description

The present invention relates to a cheese box as disclosed by the preamble of claim 1.

### Background

Cheese is typically sold in soft plastic packages which are convenient for transportation and storage in the shops and supermarkets, due to light weight and low penetration rate for oxygen in unopened state. Once opened, there is still a desire to avoid heavy exposure to oxygen and also a desire to handle the cheese in a hygienic manner. This is particularly important in hotels, hostels, lunchrooms etc. where a high number of people are involved. Even in private homes there is a desire to handle cheese in a manner making it fresh and hygienic even afte many days of handlilng. There is also the challenge of avoiding mould formation on cheese, in particular in cases where moisture is formed on the cheese surface as a consequence of the shift between room temperature and the refrigerate temperature in combination with use of moisture tight packages. For this purpose the packaging in which the cheese is sold is not convenient. Many solutions have been proposed for a better way to handle cheese, and in particular hard cheese, which is typically cut with a string or a cheese slicer.

EP 1493364 discloses a prior art container with venting holes for cheese, as in the preamble of appended claim 1.

WO 86/05960 A1 describes a cheese box with a movable inner bottom or platform and a lid designed to cover the side walls of the box. The elevation of the movable bottom wall is controlled by a knob wich by means of a latch releases a spring to cause the inner bottom to move up to next level. The box also includes a slicing mechanism for slicing cheese.

FR 1477 692 A teaches a cylindrical (tube) package for cheese provided with a string cutter. There are no provisions included to ensure that the cheese does not slide back into the tube when the cheese is cut or afterwards.

US 2014/182 139 A1 teaches a device quite similar to the above mentioned French publication.

US 2012/ 0074 174 A1 concerns a cylindrical container for salsa or the like provided with a movable inner floor. The container is fluid tight so as not to allow the salsa or other liquid product to escape and comprises a lid which may be tightly attached over the top opening, e.g. by a threaded engagement. This container does neither appear to be intended for, nor suitable for a block of cheese.

US 2005/0133 511 A1 decribes another cylindrical container of similar type. The movable inner floor can be moved by the assistance of a coil spring or be liftetd manually by a vertical upwards projecting handle attached to the centre of the movable floor or platform. At the top it may be sealed by a screwlid.

US 2018/0086 543 A1 concerns yet another container within this category described useful for viscous products. This container or jar is provided with screwlids at its lower end as well as at its upper end.

Appareantly there is still a need for improvements with regard to containers for products like cheese which do not have a liquid or viscous consistency, which is sensitive to air exposure but often even more sesititive to moisture exposure, and which do not necessarily have a cylindrical shape.

### Objective

The objective of the present invention is to provide an improvement in the manner with which cheese, and particularly cheese blocks of a consistency hard enough to be sliced with a cheese slicer, are handled and served.

It is particular object of the present inveniton to provide a cheese box allowing easy and hygienic handling of hard cheese, minimizing air exposure and hand contact while also avoiding mould formation on the cheese.

### The present invention

The above object is fulfilled with the cheese box according to the present invention as defined by claim 1.

Preferred embodiments are disclosed by the dependent claims.

The cheese box according to the presentinvention fulfillsthe above criteria and allows storage and use of t cheese with a minimum of hand contact, with little aire exposure and still with access for any occurring moisture to escape from the cheese box.

### Further details of the present invention

Below, the present invention is described in the form of non-limiting embodiments with reference to the enclosed drawings, where:
Figures 1a-c are side-sectional views of an embodiment of the present invention.
Figures 2a-e are side sectional views of another embodiment of the present invention.
Figures 3a-c are top views of different variants of a detail of the present invention.
Figure 3d is a top view of an embodiment of another detail of the present invention.
Figure 4 is a side sectional view of an optional detail of the present invention.
Figures 5a-b show a side view and an end view variant of a detail of the present invention.
Fig. 6 shows an end view of yet another variant of the detail shown in Figures 5a and 5b.
Figure 7 is a perspectival drawing of a detail of the present invention.

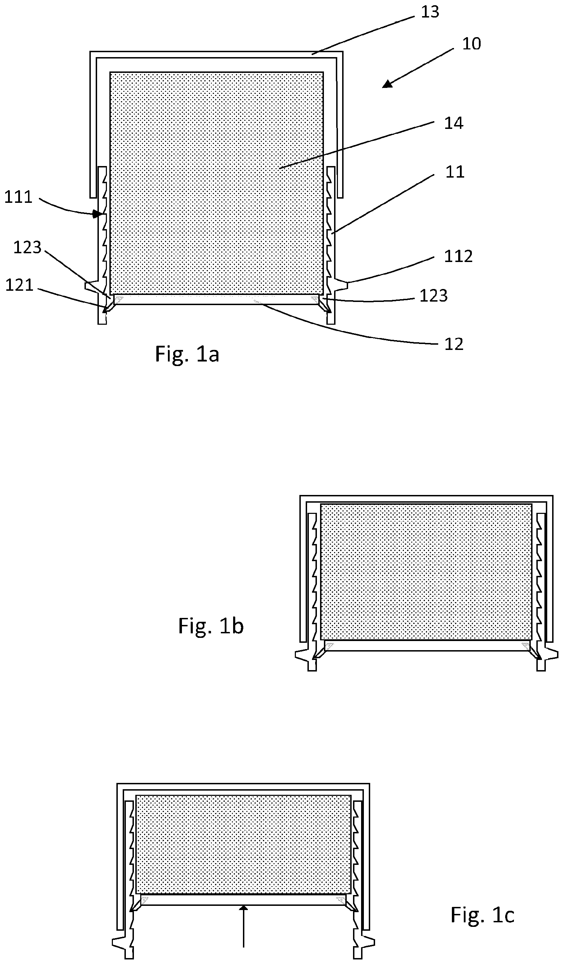

Figure 1a shows an embodiment of a cheese box 10 according to the present invention, generally comprising a main body 11 with four side walls, a floor 12, and a cover 13. A cheese 14 is also shown in Figure 1. The cover 13 is slidable with a snug fit over the main body 11 forming a substantially air tight connection between the two. Using a cover with a vertical extension about similar to the vertical extension of the main body, the cheese box can hold a cheese close to double the height of the side walls of the main body.

Figure 1a also shows that the main body has a regular ratchet type pattern of recesses 111 formed in two opposite walls. It is worth noticing that the ratchet type pattern has the form of recesses in the wall rather than as protrusions, to thereby allow all vertical movement of a block of cheese to take place without interference from this pattern. The horizontal cross-section of the cheese box is typically rectangular. The floor 12 is separate from the main body and provided with latch-members 121 arranged to engage the said recesses 111 when positioned in appropriate heights.

Thus, the floor 12 may be pushed upwards and secured at gradually increased vertical levels as the amount of remaining cheese is reduced. The floor 12 is typically slightly shorter than the distance between two opposite side walls thus forming slot shaped openings 123 along at least two side walls of the cheese box, thereby allowing a moderate ventilation around the cheese.

As also shown by Figure 1a, the height or vertical extension of the cover, is significant and about 2/3 of the vertical extension of the main body 11. It is preferred that the cover 13 has a vertical extension of at least 20 % of the vertical extension of the main body 11, more preferred of at least 35 % and most preferred of at least 65 % of the vertical extension of the main body 11.

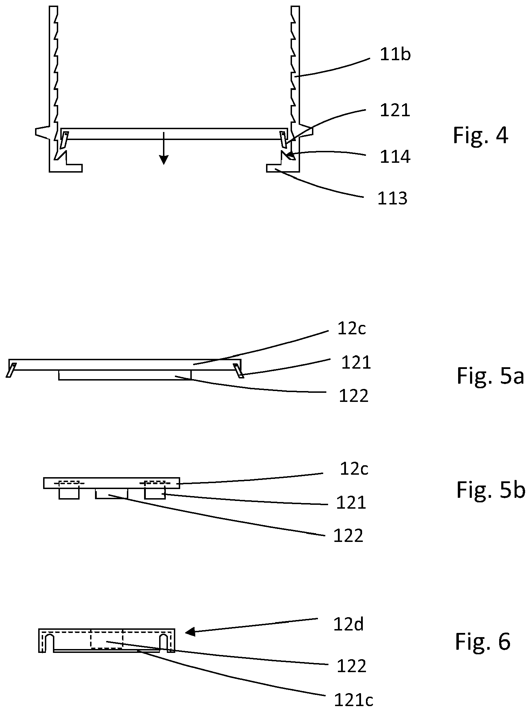

Now referring to Figure 1b and 1c as well as Figure 1a; starting with a cheese 14 much higher than the vertical extension of the main body 11 of the cheese box, there is no reason to elevate the movable floor 12 until the cheese height has been reduced as shown in Figure 5b. Instead, when the cheese is stored, the cover 13 is lowered successively from day to day until reaching the position shown in Figure 1b. From this point on, as illustrated by Figure 1c, a gradual elevation of the movable floor 12 is required to access the cheese with a cheese slicer of any desired type known.

As the latch members strives outwards, the movable floor 12 according to the shown embodiment must be inserted into the main body of the cheese box from below. For that purpose, the main body 11 of the cheese box is made without any inwardly extending flanges or the like. On the outside surface of the main body, flanges 112 may be arranged to allow a better grip for fingers when handling the box and in particular for elevating the movable floor 12.

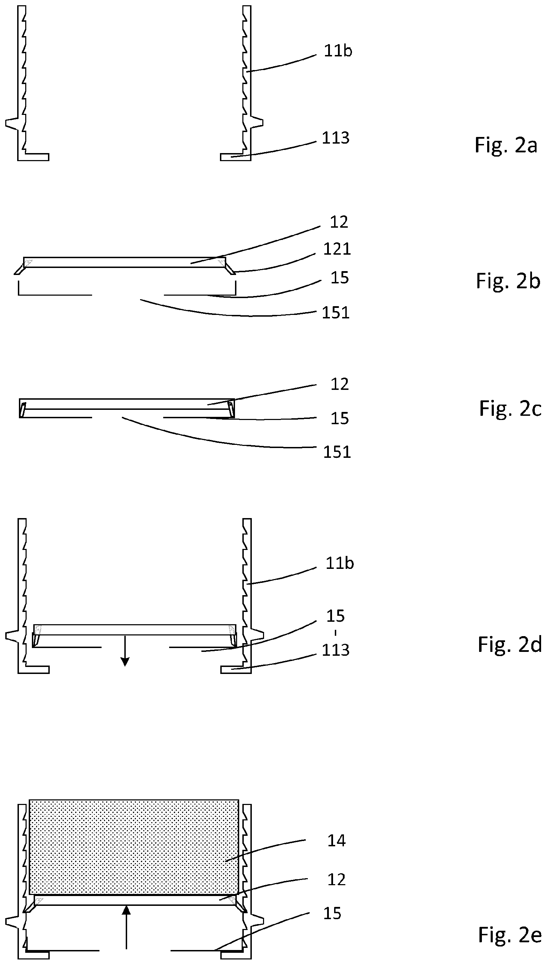

Figure 2a shows a slightly different embodiment of the main body 11b compared to the one shown in Figures 1a-c., the difference being an inward flange 113 at its bottom. The presence of the flange 113 makes the entire structure more rigid and robust. In this case, however, the movable floor 12 must be lowered into the main body from above, which calls for a particular solution to make the latch-members inactive when doing so. The embodiment shown makes use of a tray 15 of similar size as the movable floor 12, the tray 15 being provided with vertical walls or extensions arranged to hold in the latch-members 121, cf. Figures 2b and 2c. The tray 15 has an opening 151 typically large enough for penetration by two fingers or more. Figure 2d illustrates the downwards movement of the movable floor 12 with latch-members 121 inactivated by the tray 15. At this point, a new piece of cheese (not shown) may already be placed on top of the movable floor.

Figure 2e shows a point in time at which the movable floor is again elevated from the lowermost level of the main body 11b of the cheese box. By pushing upwards through the opening 151 in the tray, the latch members 121 are released from the grip of the tray and thereby activated, thereafter holding the movable floor securely in the desired stepwise positions defined by the recessed pattern in two opposite inside walls of the main body.

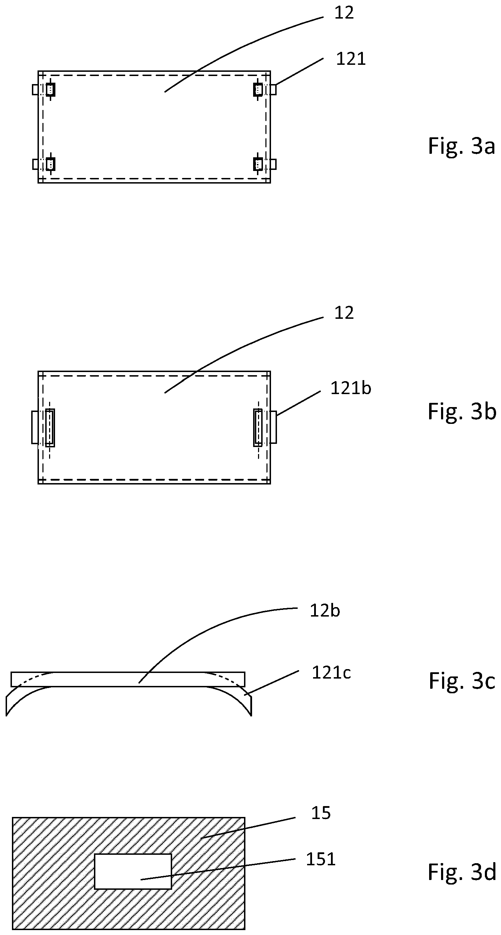

Figure 3a is a top view of an embodiment of the movable floor 12. In this case, there are four separate latch-members 121, one close to each corner of the movable floor 12. The latch members are depicted as separate elements, pivotally suspended in small openings in the movable floor and biased by small spiral spring or the like (not shown) in order to always assume a position in which their free ends extend horizontally outwards from and vertically below the movable floor, thus always engaging any recess 111 accessible in the inner wall of the main body. The broken lines along the side edges of the floor 12 illustrates that the width of the floor may be chosen to obtain suitable slots between the floor and the side walls of the main body 11. Slots may be formed along two side walls or along all four side walls.

Figure 3b shows a variant of the embodiment shown in Figure 3a, the sole difference being that the number of latch members 121b is reduced from four to two, one at each opposite short side.

Their design and function are exactly the same with the exception that the width of each latch member is somewhat larger in Figure 3b.

While Figures 3b and 3a shows one and two latch-members respectively at each opposite side, even a number higher than two is possible, though not required.

Figure 3c is a side view of a variant of the movable floor 12b shaped as one integral piece of material, typically a plastic material, wood or lightweight metal. As indicated, here the latch-members 121c are just integral parts of the movable floor 12b as such. With appropriate dimensions, these latch-members have an inherent flexibility allowing them to flex inwards when the movable floor 12b is pushed upwards until able to flex back into a recess at next recess position above.

While Figure 3c only provides a side view of the movable floor 12b, the latch-members 121c may come in any number from one and upwards on each opposite side, though a number higher than two would hardly be practical for cost manufacturing reasons.

Figure 3d is a top view (or bottom view) of a tray 15 used to deactivate the latch-members 121 or 121b or 121c during insertion of the movable floor 12 or 12b into the main body 11b from above. The central opening 151 is large enough for penetration of at least one finger, more preferably for at least two fingers. The central opening 151 may have any appropriate shape, such as circular, oval or rectangular.

Figure 4 shows an optional detail of the cheese box according to the present invention in a case in which the latch member 121 is a separate pivotal element as shown in Figure 3a. Click-stop positions are arranged to allow temporary arresting the latch-members in a mainly vertical position during insertion of the movable floor from above, thereby preventing the latch-members to engage the recesses. At the bottom of the main body, inclined surfaces 114 are arranged to force the free lower end of the latch-members 121 outwards from their temporary vertical position, thereby again being able to engage the recesses 111 when the movable floor is elevated. This embodiment renders the use of a tray 15 during insertion superfluous.

Figure 5a shows a side view of a variant of the floor 12c having a lowered section 122 on its underside for improved finger contact when the floor is moved. The longitudinal extension of the lowered section 122 is typically at least corresponding to the width of two fingers and may be more. Figure 5b shows the same embodiment in and end view. If the variant shown in Figures 5a and 5b is used in combination with a tray 15 as shown in Figure 3d, the size of the lowered section 122 is typically adapted so that it fits within the boundaries of the central opening 151 thereof.

Figure 6 shows an end view of yet another embodiment or variant of the movable floor 12d. This embodiment is quite similar to the embodiment shown in a side view in Figure 3c since in both cases the latch members 121c are integral parts of the floor body 12d. At the lowermost part of the short sides of the movable floor 12d there is an edge protruding horizontally outwards with a right or acute angel on its lower side and an obtuse angle at its upper side.

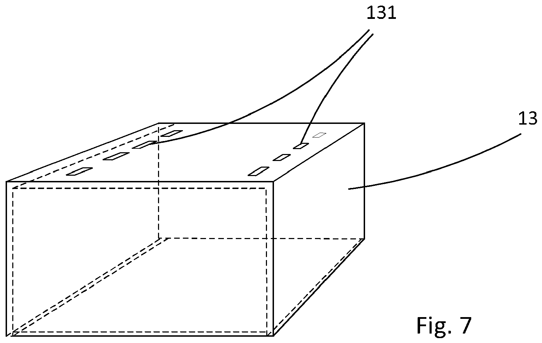

Figure 7 is a perspectival drawing of an embodiment of the cover 13 suitable for all previously discussed variants of the cheese box according to the present invention. On the top surface of the cover, a number of minor holes 131 are provided to allow a moderate ventilation of the cheese box from above in addition to the ventilation previously indicated at the floor. The holes 131 may have any shape and may be present in any number and may also have the form of a high number of miniaturized holes, i.e. holes so small that liquid water is not able to pass through while water vapour may pass through. In this connection, a high number of holes is a number of more than 50 holes, preferably more than 100 holes and more preferred more than 300 holes.

Generally, the number and size of the holes 131 are chosen in a balance between the need for avoiding moisture in the form of liquid water to form within the box and at the same time avoiding substantial oxidation of the cheese due to presence of oxygen within a timeframe typical for the time of consuming a piece of cheese.

In all embodiments of the present invention, the floor is designed with a sufficient strength and rigidity to hold a piece of cheese without being significantly deformed by its weight.

Use of latch-members in any form ensures that the cheese does not slide back into the cheese box once elevated even when significant forces are applied to the cheese by a cheese slicer, knife or the like.

While different materials may be used, preferably the cheese box of the present invention is made in a synthetic material and the cover in a transparent synthetic material. Wooden materials may also be used.

While the latch members in all shown embodiments are illustrated on the short sides of the box, they may as well be arranged on the long sides, and the box may come with a square surface, i.e. with four equal sides.

## Claims

1. Cheese box (10) comprising a main body (11, 11b) and a cover (13) adapted to form a tight fit with the main body (11, 11b), wherein the cheese box (10) is provided with holes for ventilation, **characterised in that** a movable floor (12, 12b, 12c, 12d) is arranged within the main body (11. 11b) and is arranged to be fixed in stepwise positions allowing a gradual elevation thereof at which sliding back of the movable floor (12, 12b, 12c, 12d) in relation to the main body (11, 11b) is prevented and that the cover is slidably arranged in relation to the main body to thereby form a height-adaptable inner space for a block of cheese.

2. Cheese box (10) as claimed in claim 1, wherein at least two mutually opposite inner surfaces of the main body (11, 11b) are provided with horizontally extending recesses (111), each of which being arranged to be engaged by at least one latch-member (121, 121b, 121c) of the movable floor (12, 12b, 12c, 12d).

3. Cheese box (10) as claimed in claim 2, wherein each latch-member (121, 121b) of the movable floor (12, 12c) extends laterally and with a downward inclination from the movable floor (12, 12c) to a lower free end, the latch-member (121, 121b) being arranged to exert an outward force at its free lower end.

4. Cheese box (10) as claimed in claim 2 or 3, wherein the at least two latch-members (121, 121b) are separate, replaceable members pivotally suspended from the movable floor (12, 12c).

5. Cheese box (10) as claimed in claim 4, wherein each of the at least two latch-members (121, 121b) exerts an outwardly directed force at its free end, caused by the action of a spiral spring or the like.

6. Cheese box (10) as claimed in any one of claims 2-3, wherein the at least two latch-members (121c) are made as integral elements of the movable floor (12b, 12d).

7. Cheese box (10) as claimed in any one of the preceding claims, wherein the fit between the main body (11, 11b) and the cover (13) is substantially airtight.

8. Cheese box (10) as claimed in any one of the preceding claims, wherein ventilation holes are arranged as slot shaped openings (123) along at least two sides of the movable floor (12b, 12d).

9. Cheese box (10) as claimed in any one of the preceding claims, wherein ventilation holes (131) are arranged as a number of discrete holes in the cover (13).

10. Cheese box (10) as claimed in claim 9, wherein the ventilation holes in the cover (13) are arranged as a high number of miniaturized holes too small to allow liquid water to pass through.

11. Cheese box (10) as claimed in any one of the preceding claims, wherein the cover (13) has a vertical extension of at least 20 % of the vertical extension of the main body (11, 11b), more preferred of at least 35 % and most preferred of at least 65 % of the vertical extension of the main body (11, 11b).

## Patentansprüche

1. Käsebox (10) mit einem Hauptkörper (11, 11b) und einem an den Hauptkörper (11, 11b) angepassten dicht schließenden Deckel (13), wobei die Käsebox (10) mit Belüftungslöchern versehen ist, **dadurch gekennzeichnet, dass** innerhalb des Hauptkörpers (11, 11b) ein beweglicher Boden (12, 12b, 12c, 12d) angeordnet ist, der dazu eingerichtet ist, schrittweise an Stellen fixiert zu werden, wobei diesbezüglich eine stufenweise Erhöhung ermöglicht wird, wodurch ein Zurückgleiten des beweglichen Bodens (12, 12b, 12c, 12d) in Bezug auf den Hauptkörper (11, 11b) verhindert wird und, dass der Deckel verschiebbar in Bezug auf den Hauptkörper angeordnet ist, um dadurch einen höhenangepassten Innenraum für einen Käseblock zu bilden.

2. Käsebox (10) nach Anspruch 1, wobei mindestens zwei einander gegenüberliegende Innenflächen des Hauptkörpers (11, 11b) mit sich horizontal erstreckenden Aussparungen (111) versehen sind, von denen jede dazu eingerichtet ist, mit mindestens einem Verriegelungselement (121, 121b, 121c) des beweglichen Bodens (12, 12b, 12c, 12d) in Eingriff gebracht zu werden.

3. Käsebox (10) nach Anspruch 2, wobei sich jedes Verriegelungselement (121, 121b) des beweglichen Bodens (12, 12c) seitlich und mit einer Abwärtsneigung vom beweglichen Boden (12, 12c) zu einem unteren freien Ende erstreckt, wobei das Verriegelungselement (121, 121b) dazu eingerichtet ist, eine nach außen gerichtete Kraft an seinem freien unteren Ende auszuüben.

4. Käsebox (10) nach Anspruch 2 oder 3, wobei die mindestens zwei Verriegelungselemente (121, 121b) getrennte, austauschbare Elemente sind, die schwenkbar an dem beweglichen Boden (12, 12c) aufgehängt sind.

5. Käsebox (10) nach Anspruch 4, wobei jedes der mindestens zwei Verriegelungselemente (121, 121b) an seinem freien Ende eine nach außen gerichtete Kraft ausübt, die durch die Wirkung einer Spiralfeder oder dergleichen verursacht wird.

6. Käsebox (10) nach einem der Ansprüche 2-3, wobei die mindestens zwei Verriegelungselemente (121c) als zusammenhängende Elemente des beweglichen Bodens (12b, 12d) ausgebildet sind.

7. Käsebox (10) nach einem der vorhergehenden Ansprüche, wobei die Passung zwischen dem Hauptkörper (11, 11b) und dem Deckel (13) im Wesentlichen luftdicht ist.

8. Käsebox (10) nach einem der vorhergehenden Ansprüche, wobei Lüftungslöcher als schlitzförmige Öffnungen (123) entlang mindestens zwei Seiten des beweglichen Bodens (12b, 12d) angeordnet sind.

9. Käsebox (10) nach einem der vorhergehenden Ansprüche, wobei Belüftungslöcher (131) als eine Anzahl von getrennten Löchern in der Abdeckung (13) angeordnet sind.

10. Käsebox (10) nach Anspruch 9, wobei die Belüftungslöcher im Deckel (13) als eine große Anzahl in Miniaturskala hergestellten Löchern angeordnet sind, die zu klein sind, um das Durchsickern von flüssigem Wasser zu ermöglichen.

11. Käsebox (10) nach einem der vorhergehenden Ansprüche, wobei der Deckel (13) eine vertikale Ausdehnung von mindestens 20% der vertikalen Ausdehnung des Hauptkörpers (11, 11b), mehr bevorzugt von mindestens 35% und insbesondere von mindestens 65% der vertikalen Ausdehnung des Hauptkörpers (11, 11b) aufweist.

## Revendications

1. Boîte à fromage (10) comprenant un corps principal (11, 11b) et un couvercle (13) adapté pour former un ajustement serré avec le corps principal (11, 11b), dans laquelle la boîte à fromage (10) est fournie avec des trous pour la ventilation, **caractérisée en ce qu'**un sol mobile (12, 12b, 12c, 12d) est agencé à l'intérieur du corps principal (11, 11b) et est agencé pour être fixé dans des positions progressives permettant une élévation progressive de celui-ci à laquelle le glissement vers l'arrière du sol mobile (12, 12b, 12c, 12d) par rapport au corps principal (11, 11b) est empêché et que le couvercle est agencé de manière coulissante par rapport au corps principal pour former ainsi un espace intérieur adaptable en hauteur pour un bloc de fromage.

2. Boîte à fromage (10) selon la revendication 1, dans laquelle au moins deux surfaces intérieures mutuellement opposées du corps principal (11, 11b) sont fournies avec des évidements s'étendant horizontalement (111), dont chacun est agencé pour être mis en prise par au moins un verrou (121, 121b, 121c) du sol mobile (12, 12b, 12c, 12d).

3. Boîte à fromage (10) selon la revendication 2, dans laquelle chaque élément de verrouillage (121, 121b) du sol mobile (12, 12c) s'étend latéralement et avec une inclinaison vers le bas depuis le sol mobile (12, 12c) jusqu'à une extrémité libre inférieure, l'élément de verrouillage (121, 121b) étant agencé pour exercer une force vers l'extérieur à son extrémité inférieure libre.

4. Boîte à fromage (10) selon la revendication 2 ou 3, dans laquelle les au moins deux éléments de verrouillage (121, 121b) sont des éléments remplaçables séparés suspendus de manière pivotante au sol mobile (12, 12c).

5. Boîte à fromage (10) selon la revendication 4, dans laquelle chacun des au moins deux éléments de verrouillage (121, 121b) exerce une force dirigée vers l'extérieur à son extrémité libre, provoquée par l'action d'un ressort spiral ou similaire.

6. Boîte à fromage (10) selon l'une quelconque des revendications 2 à 3, dans laquelle les au moins deux éléments de verrouillage (121c) sont réalisés en tant qu'éléments solidaires du sol mobile (12b, 12d).

7. Boîte à fromage (10) selon l'une quelconque des revendications précédentes, dans laquelle l'ajustement entre le corps principal (11, 11b) et le couvercle (13) est sensiblement étanche à l'air.

8. Boîte à fromage (10) selon l'une quelconque des revendications précédentes, dans laquelle des trous de ventilation sont agencés sous forme d'ouvertures en forme de fente (123) le long d'au moins deux côtés du sol mobile (12b, 12d).

9. Boîte à fromage (10) selon l'une quelconque des revendications précédentes, dans laquelle des trous de ventilation (131) sont agencés sous la forme d'un certain nombre de trous discrets dans le couvercle (13).

10. Boîte à fromage (10) selon la revendication 9, dans laquelle les trous de ventilation dans le couvercle (13) sont agencés en un nombre élevé de trous miniaturisés trop petits pour permettre le passage de l'eau liquide.

11. Boîte à fromage (10) selon l'une quelconque des revendications précédentes, dans laquelle le couvercle (13) a une extension verticale d'au moins 20 % de l'extension verticale du corps principal (11, 11b), de préférence d'au moins 35 % et de préférence d'au moins 65 % de l'extension verticale du corps principal (11, 11b).
